# EUROPÄISCHE PATENTSCHRIFT

(11) **EP 3 652 457 B1**
(45) Veröffentlichungstag und Bekanntmachung des Hinweises auf die Patenterteilung: **18.05.2022**
(21) Anmeldenummer: 18746611.5
(22) Anmeldetag: 10.07.2018
(51) Int. Cl.: F16D 3/04, F16D 3/18, H01H 33/42

(54) **KUPPLUNGSELEMENT**
COUPLING ELEMENT
ÉLÉMENT D'ACCOUPLEMENT

(30) Priorität: 21.08.2017 DE 102017214543
(43) Veröffentlichungstag der Anmeldung: 20.05.2020
(73) Patentinhaber: Siemens Aktiengesellschaft, 80333 München (DE)
(72) Erfinder: LIEDTKE, Marcus, 04275 Leipzig (DE); BISCHOFF, Daniel, 64521 Gross-Gerau (DE); NITSCHE, Jörg, 63477 Maintal (DE)
(86) Internationale Anmeldenummer: PCT/EP2018/068668
(87) Internationale Veröffentlichungsnummer: WO 2019/037935

(56) Entgegenhaltungen:
- EP-A2- 1 093 140
- DE-A1- 2 330 875
- US-A- 3 054 275
- US-A- 3 826 108

## Beschreibung

Die Erfindung betrifft eine gasisolierte Mittelspannungsschaltanlage mit einem Kupplungselement zur Verbindungzweier rotierender Wellen.

Zur Übertragung von Drehbewegungen zwischen Wellen werden regelmäßig geeignete Kupplungen eingesetzt. Dabei kann es in bestimmten Einsatzszenarien erforderlich sein, einen Versatz zwischen den Wellen durch eine geeignete Kupplung auszugleichen. Derartige Kupplungen sind aus DE2330875 und US3054275 bekannt.

Z.B. ist in der Fachwelt die Verwendung von sog. Oldham-Kupplungen oder Kreuzschieberkupplungen bekannt, um einen Radialversatz von zwei zu koppelnden parallelen Wellen auszugleichen. Diese ist für manche Einsatzszenarien nicht perfekt geeignet bzw. unnötig komplex.

Es besteht daher weiterhin ein Bedarf an der Entwicklung von effizienten, aufwandsarmen Kupplungen mit Toleranzausgleich, die für Einsatzszenarien optimiert sind. EP1093140 A2 zeigt eine gasisolierte Schaltanlage.

Die Erfindung hat zur Aufgabe, eine derartige Kupplung zu ermöglichen, welche sich für die Übertragung von Drehbewegungen in eine gasisolierte Mittelspannungsschaltanlage eignet.

Die Aufgabe wird gelöst durch eine gasisolierte Mittelspannungsschaltanlage nach Anspruch 1. Vorteilhafte Weiterbildungen sind in den Unteransprüchen angegeben.

Es wird ein Kupplungselement zur Kupplung zweier Wellen vorgeschlagen. Dieses ist gebildet mit zwei starr verbundenen, beabstandeten Koppelscheiben (d.h. Scheiben, durch die die Kupplung mit den Wellen vermittelt bzw. realisiert wird) , welche zueinander parallel angeordnet sind und jeweils eine Mehrzahl von um ein Scheibenzentrum angeordneten Nuten (der Begriff "Nut" ist dabei so breit zu verstehen, dass der die Begriffe "Einbuchtung" und "Vertiefungen" umfasst) für die Aufnahme von Nasen (Der Begriff "Nase" ist dabei so breit zu verstehen, dass der die Begriffe "Vorsprung" und "Ausstülpung" umfasst) eines Gegenstücks zwecks Kraftübertragung zwischen Koppelscheibe und Gegenstück aufweisen. Dabei sind die Koppelscheiben bzgl. ihrer Zentren koaxial im Hinblick auf die Kupplung der zwei Wellen angeordnet.

Die Gegenstücke können starr mit den zu kuppelnden Wellen verbunden sein, so dass durch das Kupplungselement die Kupplung der Wellen vermittelt bzw. realisiert wird.

Vorzugsweise weisen die Koppelscheiben eine identische Form auf. Dann können auch die Gegenstücke formidentisch ausgestaltet sein.

Es ist sinnvoll, wenn darüber hinaus auch die Nuten einer Koppelscheibe eine identische Form haben. Auch die Abstände der benachbarten Nuten einer Koppelscheibe können gleich bzw. fest sein.

In diesem Fall wird die Koppelscheibe in der Regel rotationssymmetrisch bzgl. seines Zentrums sein, wobei eine Rotation um den Winkel 360° / n (n = Anzahl der Nuten) die Koppelscheibe in eine identische Stellung überführt.

Die Anzahl der Nuten einer Koppelscheibe kann z.B. ein Vielfaches von zwei betragen, wobei eine Anzahl von vier einen guten Kompromiss zwischen geringer Komplexität und gutem Kraftübertrag darstellt.

Vorzugsweise sind die zwei Koppelscheiben bzgl. ihrer Form identisch. Zudem können sie bzgl. der Richtung der zu kuppelnden Wellen deckungsgleich sein bzw. eine identische Orientierung der Nuten aufweisen (d.h. kein Winkelversatz bzw. Drehversatz der Koppelscheiben bzgl. ihrer Nuten). Alternativ kann ein geeigneter Drehversatz, z.B. 45°, vorgesehen sein. Gemäß einer Ausgestaltung des Kupplungselements weist zumindest eine Koppelscheibe (vorzugsweise beide Koppelscheiben) im Bereich ihres Zentrums eine Aussparung auf. Diese Aussparung erlaubt z.B. eine Einführung einer Achse von außerhalb des Kupplungselements.

Eine weitere Ausgestaltung des Kupplungselements sieht vor, dass Kanten der Nuten abgerundet geformt sind. Diese Abrundung kann, aber muss nicht alle Nuten betreffen.

Das Kupplungselement sowie die Gegenstücke der Koppelscheiben können aus Aluminium, einer Aluminium-Legierung oder gehärtetem Stahl bestehen.

Die Offenbarung betrifft auch ein Kupplungssystem mit einem Kupplungselement sowie mindestens einem Gegenstück zu einer Koppelscheibe des Kupplungselements. Das mindestens eine Gegenstück weist dabei mit Nasen auf, die für den Eingriff in Nuten einer Koppelscheibe ausgestaltet bzw. angeordnet sind.

Das mindestens eine Gegenstück des Kupplungssystems kann mit einer ringförmigen Wand gebildet sein, welche nach innen gerichtete Ausstülpungen aufweist, wobei die Ausstülpungen bzgl. Form und Anordnung als Nasen für den Eingriff in Nuten einer Koppelscheibe ausgebildet sind.

Gemäß einer Ausgestaltung des Kupplungssystems sind Nasen und Nuten bzgl. Größe und Form derart ausgestaltet, dass bei Eingriff bzw. Einführung der Nasen des zumindest einen Gegenstücks in die Nuten einer Koppelscheibe eine gegenseitige Verdrehung von Gegenstück und Koppelscheibe um einen kleinen Winkelbereich möglich ist. D.h. ein gewisses Spiel wird realisiert, wodurch ein gewisser Drehversatz ausgeglichen werden kann. Der "kleiner Winkelbereich" ist geringer als der Winkel 360° / n (n = Anzahl der Nuten) und vorzugsweise nicht größer als ein Bruchteil davon.

Beim Kupplungssystem kann zudem das zumindest eine Gegenstück und das Kupplungselement für eine gegenseitige Verkippung um einen kleinen Winkel senkrecht zur durch die zu kuppelnden Wellen definierten Richtung ausgestaltet sein. Als "kleiner Winkel" wird hier ein Winkel verstanden, der kleiner 45° und vorzugsweise nicht größer als 10° ist. D.h. Gegenstück und Koppelscheibe sind für ein Kippspiel ausgestaltet. Die konkrete Realisierung kann z.B. bei einem ringförmigen Gegenstück mittels eines Spalts zwischen der Wand des Rings und dem Kupplungselement erfolgen. Auf diese Weise kann eine Kompensation eines Versatzes der zu kuppenden Wellen bewerkstelligt werden.

Die Erfindung betrifft eine gasisolierte Schaltanlage gemäß Anspruch 1, mit einem Schalter (z.B. Trennschalter oder Leistungsschalter) und einer Durchführung nach außen für eine Änderung einer Stellung des Schalters mittels einer über die Durchführung übermittelbaren Drehbewegung (z.B. über eine kinematische Kette), welche mit einem Kupplungselement gebildet ist.

Gemäß einer Weiterbildung der Schaltanlage ist die Durchführung mit zwei Gegenstücken gebildet, in welche das Kupplungselement eingreift, und das Kupplungselement und die Gegenstücke sind für ein geringes axiales Spiel eingerichtet. D.h. die Koppelscheiben des Kupplungselements sind in axialer Richtung (definiert durch zu die zu kuppenden Wellen) nicht direkt in Kontakt mit Gegenstücken (bzw. anderen Elementen), sondern es ist ein Spalt vorgesehen, durch welchen das Spiel realisiert ist. Anders ausgedrückt ist ein Abstand zwischen dem Kupplungselement und den Gegenstücken vorgesehen, wodurch das axiale Spiel zustande kommt. Das Spiel beträgt typischerweise nicht mehr als einen Bruchteil der axialen Länge des Kupplungselements.

Gemäß einer Ausgestaltung der erfindungsgemäßen Schaltanlage ist die Durchführung der Schaltanlage mit einem Kupplungssystem gebildet und das mindestens eine Gegenstück des Kupplungssystems weist eine Öffnung für die formschlüssige Aufnahme einer Welle auf. Diese Welle kann sich weiter in eine in ihrem Zentrum vorgesehene Aussparung einer Koppelscheibe erstrecken, ohne dass sich ein Kontakt ergeben kann (Kupplung allein über Gegenstück und Koppelscheibe).

Die Erfindung wird im Folgenden anhand von Figuren im Rahmen eines Ausführungsbeispiels näher beschrieben. Es zeigen:
Fig. 1: eine erfindungsgemäße Schaltanlage,
Fig. 2: einen Trennschalter und eine Drehdurchführung, welche in der Schaltanlage von Fig. 1 angeordnet sind,
Fig. 3: ein Kupplungselement mit Gegenstück,
Fig. 4: eine Schnittansicht eines Kupplungselements,
Fig. 5: ein Kupplungselement als Teil einer Durchführung entsprechend Fig. 2, und
Fig. 6: ein Kupplungselement als Teil einer Durchführung entsprechend Fig. 2, mit einem Versatz der zu kuppelnden Wellen.

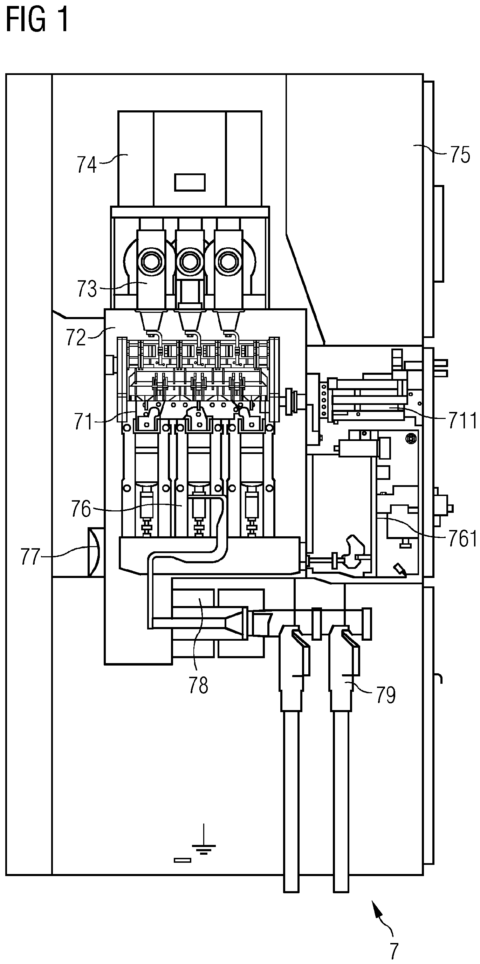

In Fig. 1 ist eine Mittelspannungsschaltanlage 24kV gezeigt. Diese umfasst einen Dreistellungs-Trennschalter 71, welcher in einem hermetisch verschweißten Edelstahlbehälter angeordnet ist. Dieser Edelstahlbehälter ist mit einem Isoliergas (derzeit in der Regel SF6) gefüllt. Mittels eines Antriebs 711 können die Stellungen des Dreistellungs-Trennschalters 71 verändert werden. Zudem sind Sammelschienen 73, eine Spannungswandler 74, eine Niederspannungsschrank 75, eine Leistungsschalter mit Vakuumröhre 76, ein Antrieb 761 für den Leistungsschalter, eine Druckentlastung 77 ein Stromwandler 78 und ein Kabelanschluss eingezeichnet.

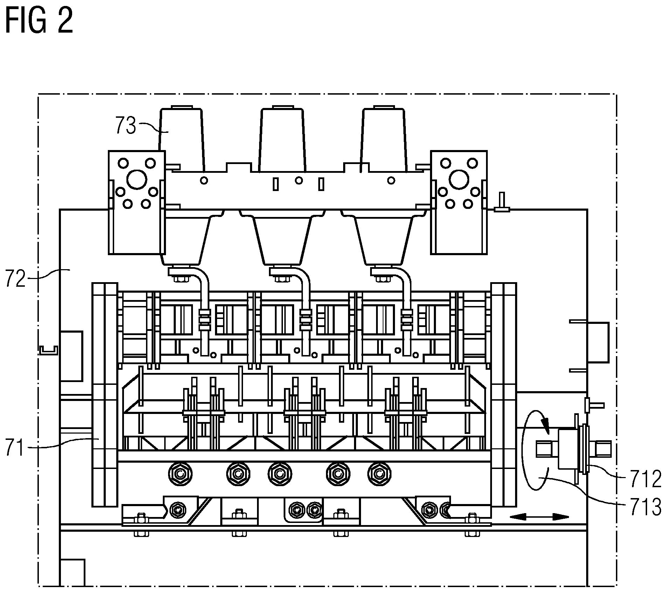

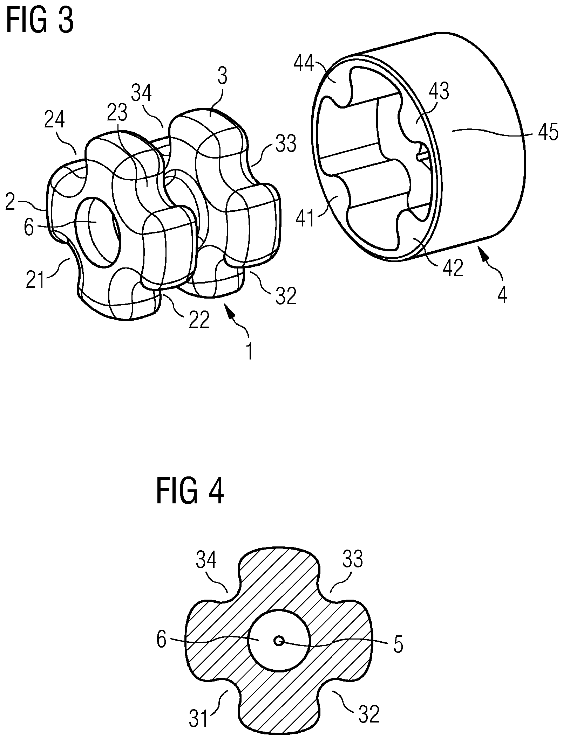

Fig. 2 zeigt einen Ausschnitt mit Trennschalter 71. Die Stellung des Trennschalters 71 kann durch Applizierung einer Drehbewegung über das Einstellelement 712 von außerhalb des Schalters mit Hilfe des Antriebs 711 (vgl. Fig. 1) verändert werden. Dazu wird das Einstellelement 712 im Bereich 713 mit dem Trennschalter 71 gekuppelt. Für diese Kupplung ist es sinnvoll, einen Toleranzausgleich zwischen dem geschweißten Behälter 72 und dem Trennschalter 71 vorzusehen. Der Toleranzausgleich wird benötigt, etwaige durch Schweißverzug oder Fertigungstoleranzen bedingte Ungenauigkeiten auszugleichen. Dieser Ausgleich wird durch die in den Fig. 3 - 6 dargestellte Kupplung realisiert, welche Teil der kinematischen Kette ist. Die Kupplung überträgt über den Antrieb 711 und eine gasdichte Drehdurchführung 712 eine Bewegung eines Schaltschlüssels in eine rotatorische Schaltbewegung des Trennschalters im gasdichten Behälter. Der Schaltschlüssel wird durch einen Bediener appliziert. Der Schaltwinkel des Schalters beträgt dabei jeweils 50° von AUS-EIN und AUS-ERDE.

In Fig. 3 ist ein Kupplungselement 1 gezeigt. Dieses ist durch zwei fest verbundene Koppelscheiben 2 und 3 gebildet, welche mit Nuten 21, 22, 23 und 24 (Koppelscheibe 2) bzw. 31, 32, 33 und 34 (Koppelscheibe 3) versehen sind. Die beiden Koppelscheiben 2 und 3 sind parallel zueinander angeordnet und koaxial bzgl. ihres Mittelpunkts; es ist zwecks Kupplung eine Strukturierung der Koppelscheiben orthogonal bzw. radial zur Kupplungsrichtung vorgesehen, während im Wesentlichen keine Strukturierung in Kupplungsrichtung, d.h. in axialer Richtung, vorhanden ist (außer Abrundung der Kanten).

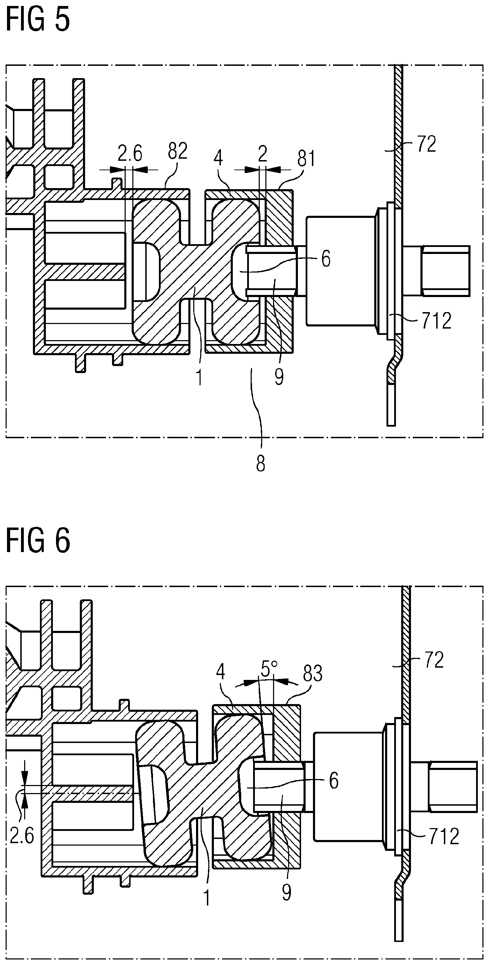

Durch die Form und die Anzahl der Nuten haben die Koppelscheiben die Kontur eines vierblättrigen Kleeblatts. Man könnte auch von einer Art Kranzkontur sprechen. Das gesamte Kupplungselement 1 nimmt so die Form eines Koppelscheiben-Knochens an. Zudem ist ein Gegenstück oder negativ 4 zu einer Koppelscheibe 3 dargestellt. Dieses ringförmige Gegenstück 4 weist eine runde äußere Hülle 45 aus, an dessen Innenseite Ausstülpungen bzw. Nasen 41, 42, 43 und 44 vorgesehen sind, welche in die Nuten 31, 32, 33 und 43 der Koppelscheibe 3 passen. Durch die Verwendung von zwei Kleeblattkonturen bzw. deren Gegenstück verbunden über eine Welle kann einen Versatz von z.B. 5° beider Achsen ausgeglichen werden (wie in Fig. 5 genauer gezeigt ist). Als Material wird eine Aluminiumlegierung verwendet, durch die eine plastische Verformung vermieden wird. Das Kupplungselement 1 übernimmt die Funktion einer drehbaren Welle und lässt durch seine abgerundete Form einen Winkelversatz zu. Die zu kuppelnden Wellen werden jeweils an beiden Seiten des Kupplungselements 1 in ein Gegenstück zu den Koppelscheiben 2 bzw. 3 gefügt.

Fig. 4 zeigt in einer Schnittdarstellung die Koppelscheibe 3 des Kupplungselements 1. Die Abrundung der Nuten 31, 32, 33 und 34 ist deutlich zu sehen. Deren Form und die Form der Nasen des Gegenstücks sind so aufeinander abgestimmt, dass ein moderater Winkelversatz der Gegenstücke ausgeglichen werden kann. Das Zentrum der Koppelscheibe 3 ist mit dem Bezugszeichen 5 gekennzeichnet. Die beiden Koppelscheiben 2 und 3 sind in dem Sinne koaxial, als dass eine Verbindung deren Zentren als virtuelle Drehachse gesehen werden kann, um welche die zu übertragende Drehbewegung erfolgt (abgesehen von durch Toleranzen bedingten Ungenauigkeiten). In der Mitte der Koppelscheibe 3 ist eine Aussparung 6 vorgesehen. Diese ist nicht nur sinnvoll im Hinblick auf Materialeinsparung, sondern übernimmt bei der strukturellen Ausgestaltung der in Fig. 5 gezeigten Durchführung eine Funktion bzgl. der zu kuppelnden Achse.

In Fig. 5 ist eine Drehdurchführung 8 dargestellt, durch die das Einstellelement 712 (vgl. Fig. 2) mit dem Trennschalter (in Fig. 5 nicht dargestellt) gekuppelt wird. Die Drehbewegung wird über die Welle 9 übermittelt. Welle 9 ist mittels Formschluss mit dem Gegenstück 81 verbunden. Das Gegenstück 81 greift in das Kupplungselement 1 ein. Die Welle 9 erstreckt sich teilweise in die Aussparung 6 des Kupplungselements 1. Die Gesamtanordnung beinhaltet Spalte bzw. axiale Spiele auf beiden Seiten des Kupplungselements 1. Diese axialen Spiele 81 (2 mm) und 82 (2,6 mm) erlauben nicht nur Toleranzen in axialer Richtung, sondern haben auch eine Funktion im Hinblick auf ein Kippspiel bzw. eine Kipptoleranz 83, wie in Fig. 6 gezeigt ist. Diese Kipptoleranz beträgt z.B. 5° und kompensiert einen Versatz der zu kuppelnden Wellen. Mit dem in der Erklärung von Fig. 3 angesprochenen Drehspiel sind somit Spiele bzw. Toleranzen in allen Raumdimensionen realisiert, d.h. Toleranzen bzgl. einer Verdrehung, eine axialen Verschiebung und einer Verkippung.

Das Kupplungssystem wird am Beispiel einer Schaltanlage beschrieben, ist aber generell einsetzbar für Anwendungsszenarien mit starrer Kupplung zweier Wellen.

## Patentansprüche

1. Gasisolierte Mittelspannungsschaltanlage (7), mit
- einem Schalter (71), und
- einer Durchführung (8) nach außen für eine Änderung einer Stellung des Schalters (71) mittels einer über die Durchführung (8) übermittelbaren Drehbewegung, welche mit einem Kupplungselement (1) zur Kupplung zweier Wellen gebildet ist, **dadurch gekennzeichnet, dass**
- das Kupplungselement (1) mit zwei starr verbundenen, beabstandeten Koppelscheiben (2, 3) gebildet ist, welche
- zueinander parallel angeordnet sind,
- jeweils eine Mehrzahl von um ein Scheibenzentrum angeordneten Nuten (21,22,23,24,31,32,33,34) für die Aufnahme von Nasen (41,42,43,44) eines Gegenstücks (4) zwecks Kraftübertragung zwischen Koppelscheibe und Gegenstück aufweisen, und
- bzgl. ihrer Zentren (5) koaxial im Hinblick auf die Kupplung der zwei Wellen angeordnet sind.

2. Gasisolierte Mittelspannungsschaltanlage (7) nach Anspruch 1,
**dadurch gekennzeichnet, dass**
die Koppelscheiben (2,3) des Kupplungselement (1) eine identische Form haben.

3. Gasisolierte Mittelspannungsschaltanlage (7) nach einem der vorhergehenden Ansprüche,
**dadurch gekennzeichnet, dass**
die Nuten (31,32,33,34) einer Koppelscheibe eine identische Form haben.

4. Gasisolierte Mittelspannungsschaltanlage (7) nach einem der vorhergehenden Ansprüche,
**dadurch gekennzeichnet, dass**
die Abstände zwischen benachbarten Nuten (31,32,33,34) einer Koppelscheibe identisch sind.

5. Gasisolierte Mittelspannungsschaltanlage (7) nach einem der vorhergehenden Ansprüche,
**dadurch gekennzeichnet, dass**
die Anzahl der Nuten einer Koppelscheibe ein Vielfaches von zwei und vorzugsweise vier beträgt.

6. Gasisolierte Mittelspannungsschaltanlage (7) nach einem der vorhergehenden Ansprüche,
**dadurch gekennzeichnet, dass**
die zwei Koppelscheiben (2,3) bzgl. ihrer Form identisch sind.

7. Gasisolierte Mittelspannungsschaltanlage nach Anspruch 6, **dadurch gekennzeichnet, dass**
die Koppelscheiben (2,3) bzgl. der Richtung der zu kuppelnden Wellen deckungsgleich oder um 45° drehversetzt sind.

8. Gasisolierte Mittelspannungsschaltanlage (7) nach einem der vorhergehenden Ansprüche,
**dadurch gekennzeichnet, dass**
das zumindest eine Koppelscheibe (2,3) im Bereich ihres Zentrums (5) eine Aussparung (6) aufweist.

9. Gasisolierte Mittelspannungsschaltanlage (7) nach einem der vorhergehenden Ansprüche,
**dadurch gekennzeichnet, dass**
Kanten der Nuten abgerundet geformt sind.

10. Gasisolierte Mittelspannungsschaltanlage (7) nach einem der vorhergehenden Ansprüche,
**dadurch gekennzeichnet, dass**
es aus Aluminium, einer Aluminium-Legierung oder gehärtetem Stahl besteht.

11. Gasisolierte Mittelspannungsschaltanlage (7) nach einem der Ansprüche 1 bis 10, umfassend
mindestens ein Gegenstück (4) zu einer Koppelscheibe (3) des Kupplungselements (1), welches Nasen (41,42,43,44) für den Eingriff in Nuten (31,32,33,34) der Koppelscheibe (3) aufweist.

12. Gasisolierte Mittelspannungsschaltanlage (7) nach Anspruch 11,
**dadurch gekennzeichnet, dass**
das Gegenstück (4) mit einer ringförmigen Wand (45) gebildet ist, welche nach innen gerichtete Ausstülpungen (41,42,43,44) aufweist, welche bzgl. Form und Anordnung als Nasen für den Eingriff in Nuten (31,32,33,34) einer Koppelscheibe (3) ausgebildet sind.

13. Gasisolierte Mittelspannungsschaltanlage (7) nach Anspruch 11 oder 12,
**dadurch gekennzeichnet, dass**
Nasen (41,42,43,44) und Nuten (31,32,33,34) bzgl. Größe und Form derart ausgestaltet sind, dass bei Eingriff der Nasen (41,42,43,44) des zumindest einen Gegenstücks (4) in die Nuten (31,32,33,34) einer Koppelscheibe (3) eine gegenseitige Verdrehung von Gegenstück und Koppelscheibe um einen kleinen Winkelbereich möglich ist.

14. Gasisolierte Mittelspannungsschaltanlage (7) nach einem der Ansprüche 11 bis 13,
**dadurch gekennzeichnet, dass**
das zumindest eine Gegenstück (4) und das Kupplungselement (3) für eine gegenseitige Verkippung um einen kleinen Winkel senkrecht zur durch die zu kuppelnden Wellen definierten Richtung ausgestaltet sind.

15. Gasisolierte Mittelspannungsschaltanlage (7) nach einem der vorhergehenden Ansprüche 11 bis 14,
**dadurch gekennzeichnet, dass**
die Durchführung (8) mit zwei Gegenstücken (4,73) gebildet ist, in die das Kupplungselement eingreift, und Kupplungselement (1) und Gegenstücke (4,73) für ein geringes axiales Spiel eingerichtet sind.

16. Gasisolierte Mittelspannungsschaltanlage (7) nach einem der vorhergehenden Ansprüche 11 bis 15,
**dadurch gekennzeichnet, dass**
das mindestens eine Gegenstück des Kupplungssystems eine Öffnung für die formschlüssige Aufnahme einer Welle aufweist.

## Claims

1. Gas-insulated medium-voltage switchgear assembly (7), comprising
- a switch (71), and
- a bushing (8) to the outside for changing a position of the switch (71) by means of a rotational movement which can be transmitted via the bushing (8), which bushing is formed with a coupling element (1) for coupling two shafts,
**characterized in that**
- the coupling element (1) is formed with two rigidly connected, spaced-apart coupling discs (2, 3) which
- are arranged parallel to one another,
- each have a plurality of grooves (21, 22, 23, 24, 31, 32, 33, 34), which are arranged around a disc centre, for receiving lugs (41, 42, 43, 44) of a mating piece (4) for the purpose of transmitting force between the coupling disc and the mating piece, and
- are arranged coaxially with respect to their centres (5) for the purpose of coupling the two shafts.

2. Gas-insulated medium-voltage switchgear assembly (7) according to Claim 1,
**characterized in that**
the coupling discs (2, 3) of the coupling element (1) have an identical shape.

3. Gas-insulated medium-voltage switchgear assembly (7) according to one of the preceding claims,
**characterized in that**
the grooves (31, 32, 33, 34) of one coupling disc have an identical shape.

4. Gas-insulated medium-voltage switchgear assembly (7) according to one of the preceding claims,
**characterized in that**
the spacings between adjacent grooves (31, 32, 33, 34) of one coupling disc are identical.

5. Gas-insulated medium-voltage switchgear assembly (7) according to one of the preceding claims,
**characterized in that**
the number of grooves of a coupling disc is a multiple of two and preferably four.

6. Gas-insulated medium-voltage switchgear assembly (7) according to one of the preceding claims,
**characterized in that**
the two coupling discs (2, 3) are identical with respect to their shape.

7. Gas-insulated medium-voltage switchgear assembly according to Claim 6,
**characterized in that**
the coupling discs (2, 3) are congruent or rotationally offset through 45° with respect to the direction of the shafts to be coupled.

8. Gas-insulated medium-voltage switchgear assembly (7) according to one of the preceding claims,
**characterized in that**
the at least one coupling disc (2, 3) has a cutout (6) in the region of its centre (5).

9. Gas-insulated medium-voltage switchgear assembly (7) according to one of the preceding claims,
**characterized in that**
edges of the grooves are of rounded shape.

10. Gas-insulated medium-voltage switchgear assembly (7) according to one of the preceding claims,
**characterized in that**
it consists of aluminium, an aluminium alloy or hardened steel.

11. Gas-insulated medium-voltage switchgear assembly (7) according to one of Claims 1 to 10, comprising
at least one mating piece (4) for a coupling disc (3) of the coupling element (1), which mating piece has lugs (41, 42, 43, 44) for engaging into grooves (31, 32, 33, 34) of the coupling disc (3).

12. Gas-insulated medium-voltage switchgear assembly (7) according to Claim 11,
**characterized in that**
the mating piece (4) is formed with an annular wall (45) which has inwardly directed protrusions (41, 42, 43, 44) which, in respect of shape and arrangement, are designed as lugs for engaging into grooves (31, 32, 33, 34) of a coupling disc (3).

13. Gas-insulated medium-voltage switchgear assembly (7) according to Claim 11 or 12,
**characterized in that**
lugs (41, 42, 43, 44) and grooves (31, 32, 33, 34), in respect of size and shape, are configured in such a way that, when the lugs (41, 42, 43, 44) of the at least one mating piece (4) engage into the grooves (31, 32, 33, 34) of a coupling disc (3), rotation of the mating piece and the coupling disc relative to one another through a small angular range is possible.

14. Gas-insulated medium-voltage switchgear assembly (7) according to one of Claims 11 to 13,
**characterized in that**
the at least one mating piece (4) and the coupling element (3) are configured for tilting relative to one another through a small angle perpendicular to the direction defined by the shafts to be coupled.

15. Gas-insulated medium-voltage switchgear assembly (7) according to one of the preceding Claims 11 to 14, **characterized in that**
the bushing (8) is formed with two mating pieces (4, 73) into which the coupling element engages, and
the coupling element (1) and mating pieces (4, 73) are designed for a small amount of axial play.

16. Gas-insulated medium-voltage switchgear assembly (7) according to one of the preceding Claims 11 to 15, **characterized in that**
the at least one mating piece of the coupling system has an opening for receiving a shaft in a positively locking manner.

## Revendications

1. Installation de distribution moyenne tension à isolation gazeuse (7), comportant
- un interrupteur (71), et
- un passage (8) débouchant à l'extérieur pour permettre de modifier une position de l'interrupteur (71) moyennant un mouvement rotatif susceptible d'être transmis par le biais dudit passage (8) constitué avec un élément de couplage (1) pour le couplage de deux arbres, **caractérisée en ce que**
- l'élément de couplage (1) est constitué par deux disques de couplage (2, 3) espacés et reliés rigidement disposés parallèlement l'un par rapport à l'autre,
- comportant une pluralité d'encoches chacune (21, 22, 23, 24, 31, 32, 33, 34) disposées autour d'un centre de disque destinées à reprendre des ergots (41, 42, 43, 44) d'un pendant (4) en vue d'une transmission de force entre le disque de couplage et son pendant et disposées coaxialement par rapport à leurs centres (5) en vue du couplage des deux arbres.

2. Installation de distribution moyenne tension à isolation gazeuse (7) selon la revendication 1, **caractérisée en ce que** les disques de couplage (2, 3) de l'élément de couplage (1) présentent une forme identique.

3. Installation de distribution moyenne tension à isolation gazeuse (7) selon l'une des revendications précédentes, **caractérisée en ce que**
les encoches (31, 32, 33, 34) d'un disque de couplage présentent une forme identique.

4. Installation de distribution moyenne tension à isolation gazeuse (7) selon l'une des revendications précédentes, **caractérisée en ce que**
les écarts entre des encoches adjacentes (31, 32, 33, 34) d'un disque de couplage sont identiques.

5. Installation de distribution moyenne tension à isolation gazeuse (7) selon l'une des revendications précédentes, **caractérisée en ce que**
le nombre d'encoches d'un disque de couplage est un multiple de deux et, de préférence, un multiple de quatre.

6. Installation de distribution moyenne tension à isolation gazeuse (7) selon l'une des revendications précédentes, **caractérisée en ce que**
la forme des deux disques de couplage (2, 3) est identique.

7. Installation de distribution moyenne tension à isolation gazeuse selon la revendication 6, **caractérisée en ce que** les disques de couplage (2, 3) coïncident ou sont décalés en rotation de 45° par rapport à la direction des arbres à coupler.

8. Installation de distribution moyenne tension à isolation gazeuse (7) selon l'une des revendications précédentes, **caractérisée en ce qu'**
au moins un disque de couplage (2, 3) présente une cavité (6) au droit de son centre (5).

9. Installation de distribution moyenne tension à isolation gazeuse (7) selon l'une des revendications précédentes, **caractérisée en ce que**
des bords des encoches présentent une forme arrondie.

10. Installation de distribution moyenne tension à isolation gazeuse (7) selon l'une des revendications précédentes, **caractérisée en ce qu'**
elle est réalisée en aluminium, en un alliage d'aluminium ou en acier trempé.

11. Installation de distribution moyenne tension à isolation gazeuse (7) selon l'une des revendications 1 à 10, comportant au moins un pendant (4) d'un disque de couplage (3) de l'élément de couplage (1) qui comporte des ergots (41, 42, 43, 44) pour prendre dans des encoches (31, 32, 33, 34) du disque de couplage (3).

12. Installation de distribution moyenne tension à isolation gazeuse (7) selon la revendication 11, **caractérisée en ce que**
le pendant (4) est prévu sous forme d'une paroi annulaire (45) qui comporte des protubérances (41, 42, 43, 44) dirigées vers l'intérieur conformées, de par leur forme et disposition, en tant qu'ergots pour la prise dans des encoches (31, 32, 33, 34) d'un disque de couplage (3).

13. Installation de distribution moyenne tension à isolation gazeuse (7) selon la revendication 11 ou 12, **caractérisée en ce que**
la forme et les dimensions des ergots (41, 42, 43, 44) et des encoches (31, 32, 33, 34) sont telles que lorsque les ergots (41, 42, 43, 44) de l'au moins un pendant (4) s'engagent dans les encoches (31, 32, 33, 34) d'un disque de couplage (3), la torsion mutuelle du pendant et du disque de couplage autour d'une faible plage d'angle est possible.

14. Installation de distribution moyenne tension à isolation gazeuse (7) selon l'une des revendications 11 à 13, **caractérisée en ce que**
l'au moins un pendant (4) et l'élément de couplage (3) sont conformés de manière à permettre une inclinaison mutuelle autour d'un petit angle verticalement à la direction définie par les arbres à coupler.

15. Installation de distribution moyenne tension à isolation gazeuse (7) selon l'une des revendications 11 à 14, **caractérisée en ce que** le passage (8) est formé par deux pendants (4, 73) dans lesquels s'engage l'élément de couplage et **en ce que** l'élément de couplage (1) et les pendants (4, 73) sont agencés pour présenter un faible jeu axial.

16. Installation de distribution moyenne tension à isolation gazeuse (7) selon l'une des revendications 11 à 15, **caractérisée en ce que**
l'au moins un pendant du système de couplage présente une ouverture pour reprendre un arbre par complémentarité de forme.
